# EUROPÄISCHE PATENTSCHRIFT

(11) **EP 0 647 650 B1**
(45) Veröffentlichungstag und Bekanntmachung des Hinweises auf die Patenterteilung: **19.04.2000**
(21) Anmeldenummer: 94118930.0
(22) Anmeldetag: 01.12.1989
(51) Int. Cl.: C07F 17/00, C08F 10/00, C08F 4/602

(54) **Verfahren zur Herstellung einer heterogenen Metallocenkatalysatorkomponente**
Process for the preparation of a metallocene component of a heterogeneous catalyst
Procédé de préparation d'un composant métallocène d'un catalyseur hétérogène

(30) Priorität: 03.12.1988 DE 3840772
(43) Veröffentlichungstag der Anmeldung: 12.04.1995
(62) Teilanmeldung aus: 89122199.6
(73) Patentinhaber: TARGOR GmbH, 55116 Mainz (DE)
(72) Erfinder: Antberg, Martin, Dr., D-65719 Hofheim (DE); Böhm, Ludwig, Dr., D-65795 Hattersheim (DE); Rohrmann, Jürgen, Dr., D-65779 Kelkheim (DE)

(56) Entgegenhaltungen:
- EP-A- 0 171 307
- EP-A- 0 256 981
- EP-A- 0 293 815
- EP-A- 0 320 762
- EP-A- 0 344 887
- EP-A- 0 366 290
- US-A- 4 567 244
- US-A- 4 607 112
- CHEMICAL ABSTRACTS, vol. 111, no. 1, 3.Juli 1989 Columbus, Ohio, US; abstract no. 007545, CHEN S: "Synthesis and proton NMR spectra of alkenylcyclopentadienyl Group IVB metal derivatives" XP002028153 & GAODENG XUEXIAO HUAXUE XUEBAO (KTHPDM,02510790);88; VOL.9 (4); PP.342-7, NANKAI UNIV.;INST. ELEM. ORG. CHEM.; TIANJIN; PEOP. REP. CHINA (CN),
- J. ORGANOMET. CHEM. (JORCAI,0022328X);87; VOL.320 (1); PP.27-36, ACAD. SIN.;SHANGAI INST. ORG. CHEM.; SHANGHAI; PEOP. REP. CHINA (CN), XP002028152 HE B ET AL: "Organotitanium chemistry. VII. Study on HPLC of bis- and mono(substituted cyclopentadienyl)titanium derivatives"
- JOURNAL OF ORGANOMETALLIC CHEMISTRY, Bd. 125, Nr. 1, 1977, LAUSANNE CH, Seiten 57-62, XP000646406 R. JACKSON: "Silica-supported analogues of titanocene"
- T. Kükenhöhner "Untersuchungen zur Darstellung chiraler Organotitan(IV)- Verbindungen für enantioselektive Synthesen"; Seite 46; Diplomarbeit; Veröffentlichung nicht später als 1987
- J.Am.Chem. Soc., 1980 (102), 6878-6880

## Beschreibung

Die vorliegende Erfindung bezieht sich auf ein Verfahren zur Herstellung von heterogenen Metallocenkatalysatorkomponenten unter Verwendung von Poly(methylhydrogensiloxan).

Metallocene von Übergangsmetallen sind als Katalysatorkomponenten bekannt (vgl. US 4 522 982, US 4 542 199, EP 128045). Zusammen mit Aluminoxanen bilden sie homogene Übergangsmetall-Katalysatoren, welche in aromatischen und aliphatischen Kohlenwasserstoffen löslich sind. Diese Katalysatoren sind sehr aktiv. Lösliche Katalysatoren sind nachteilig, wenn sie in bestehenden technischen Anlagen eingesetzt werden sollen, da diese in der Regel für die Verwendung von heterogenen Katalysatorsystemen eingerichtet sind. Es war daher wünschenswert, Metallocen-Katalysatoren zu finden, welche als unlösliche Feststoffe in Form einer Suspension verwendet werden können.

Bekannt sind Metallocen-Katalysatoren, bei welchen eine Zirkonocen- oder Titanocenkomponente und ein Aluminoxan gemeinsam aus einer Lösung auf einen silikatischen Träger aufgebracht werden (vgl. EP 206 794). Dieses Katalysatorsystem ist indessen wenig aktiv. Außerdem sind die Katalysatorkomponenten nicht ausreichend fest auf dem Träger verankert und können somit während der Polymerisation extrahiert werden.

Außerdem ist bekannt, daß Silyletherreste enthaltende Metallocenverbindungen unter Bildung von Siloxanbrücken auf silikatische Träger aufgebracht werden können (vgl. DE 37 18 888). Dafür ist es notwendig, dem Trägermaterial durch mehrstündiges Trocknen bei einer Temperatur von maximal 800 °C adsorptiv gebundenes Wasser zu entziehen. Somit wird ein bestimmter Hydroxylgruppengehalt eingestellt, welcher analytisch mit n-Butylmagnesiumchlorid bestimmt wird. Der so konditionierte Träger muß unter Luft- und Wasserausschluß unter Inertgas gelagert werden.

Es wurde nun gefunden, daß die oben genannten Nachteile vermieden werden könnnen, wenn man eine geeignet substituierte Metallocenverbindung unter Hydrosilylierungskatalyse mit einem Poly(methylhydrogensiloxan) umsetzt.

Die Erfindung betrifft somit das in den Ansprüchen beschriebene Verfahren.

Zur Herstellung der erfindungsgemäßen heterogenen Metallocenkatalysatorkomponente werden Verbindungen der Formel I 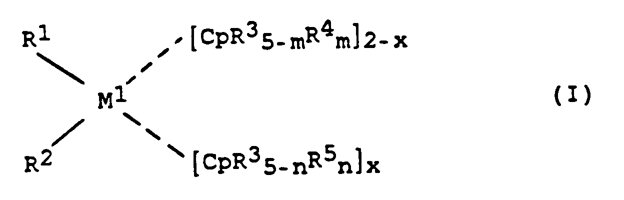 oder der Formel II 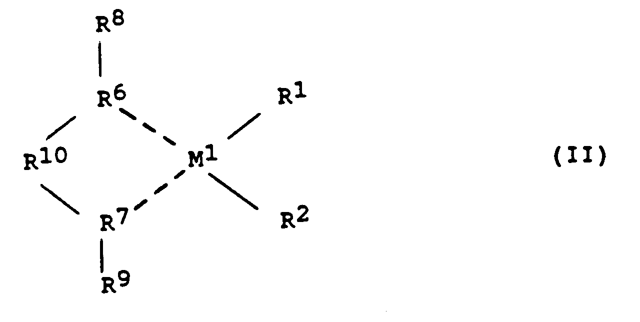 verwendet,

In Formel I bedeuten
- M¹: Zirkonium oder Hafnium, vorzugsweise Zirkonium ist und
- Cp: einen Cyclopentadienylrest bedeutet.
- R¹ und R²: sind gleich oder verschieden und bedeuten ein Wasserstoffatom, ein Halogenatom, eine C₁-C₁₀-Alkylgruppe, eine C₁-C₁₀-Alkoxygruppe, eine C₇-C₂₀-Arylalkylgruppe, eine C₆-C₁₀-Arylgruppe, eine C₆-C₁₀-Aryloxygruppe, vorzugsweise eine Alkylgruppe oder ein Halogenatom, insbesondere ein Chloratom. R¹ und R² können auch miteinander verknüpft sein und mit M¹ einen Metallocyclus bilden.
- R³: bedeutet ein Wasserstoffatom, ein Halogenatom, eine C₁-C₁₀-Alkylgruppe, eine C₆-C₁₀-Arylgruppe, eine C₇-C₂₀-Arylalkylgruppe, eine C₁-C₁₀-Fluoralkylgruppe oder C₁-C₁₀-Trialkylsilyl, C₆-C₁₀-Aryl-C₁-C₁₀-dialkylsilyl, C₁-C₁₀-Alkyl-C₆-C₁₀-diarylsilyl oder C₆-C₁₀-Triarylsilyl. R³ ist vorzugsweise ein Wasserstoffatom oder eine Methylgruppe, insbesondere ein Wasserstoffatom.
- R⁴ und R⁵: sind gleich oder verschieden und bedeuten eine C₂-C₁₀-Alkenylgruppe, eine C₈-C₁₂-Alkenylarylgruppe, eine C₂-C₁₀-Alkenoxygruppe, eine C₂-C₈-Alkenyl-C₁-C₈-dialkylsilylgruppe, eine C₂-C₈-Alkenyl-C₆-C₁₀-diarylsilylgruppe oder eine C₂-C₈-Alkenyl-C₁-C₈-alkyl-C₆-C₁₀-arylsilylgruppe. R⁴ und R⁵ sind vorzugsweise eine C₂-C₁₀-Alkenylgruppe oder eine C₂-C₈-Alkenyl-C₁-C₈-dialkylsilylgruppe.
- x: ist null oder 1
- m: gleich oder verschieden ist eine Zahl von 1 bis 3.

In Formel II bedeuten
- M¹: Titan, Zirkonium oder Hafnium, vorzugsweise Zirkonium und
- R¹ und R²: sind gleich oder verschieden und bedeuten ein Wasserstoffatom, ein Halogenatom, eine C₁-C₁₀-Alkylgruppe, eine C₁-C₁₀-Alkoxygruppe, eine C₇-C₂₀-Arylalkylgruppe, eine C₆-C₁₀-Arylgruppe, eine C₆-C₁₀-Aryloxygruppe, vorzugsweise eine Alkylgruppe oder ein Halogenatom, insbesondere ein Chloratom. R¹ und R² können auch miteinander verknüpft sein und mit M¹ einen Metallocyclus bilden.
- R⁶ und R⁷: sind gleich oder verschieden und bedeuten einen Cyclopentadienyl-, Indenyl- oder Fluorenylrest, wobei die genannten Fünfringe mit M¹ eine Sandwichstruktur bilden können. R⁶ und R⁷ sind vorzugsweise Indenylreste.
- R⁸ und R⁹: sind gleich oder verschieden, bedeuten Substituenten der genannten Fünfringe R⁶ und R⁷ in 3-Stellung und sind eine C₂-C₁₀-Alkenylgruppe oder eine C₂-C₁₀-Alkenyl-C₁-C₁₀-dialkylsilylgruppe, eine C₁-C₁₀-Alkyl-C₂-C₁₀-dialkenylsilylgruppe, eine C₂-C₁₀-Alkenyl-C₆-C₁₀-diarylsilylgruppe oder eine C₆-C₁₀-Aryl-C₂-C₁₀-dialkenylsilylgruppe, bevorzugt sind eine Alkenyl- oder Alkenyldialkylsilylgruppe, insbesondere eine Butenyl- oder Alkyldimethylsilylgruppe.
- R¹⁰: hat die in den Formeln III-VII dargestellte Bedeutung 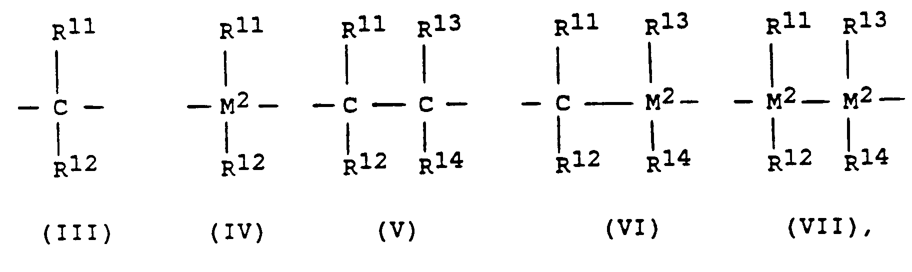 wobei
- M²: Silizium, Germanium oder Zinn, vorzugsweise Silizium ist und
- R¹¹,R¹²,R¹³ und R¹⁴: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₆-C₁₀-Aryloxygruppe oder eine C₇-C₂₀-Arylalkylgruppe bedeuten, vorzugsweise eine Dialkylsilyl- und eine 1,2-Alkandiylgruppe, insbesondere eine Dimethylsilylgruppe oder 1,2-Ethandiylgruppe bedeuten.
R¹¹ und R¹² oder R¹³ und R¹⁴ können unter Bildung spirocyclischer Systeme wie 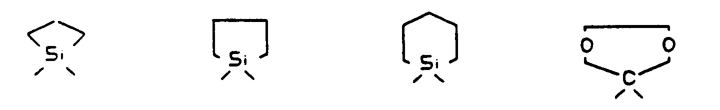 miteinander verknüpft sein, ebenso wie R¹¹ und R¹³ oder R¹² und R¹⁴ folgendes Ringsystem 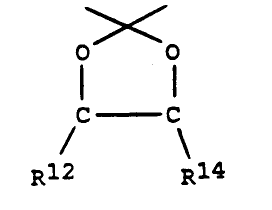 ausbilden können.
- x: ist null oder 1, vorzugsweise null.
- m und n: sind gleich oder verschieden und bedeuten eine Zahl von null bis 5, vorzugsweise 1 bis 3, insbesondere 1.

Beispiele für geeignete Metallocenverbindungen der Formel I sind

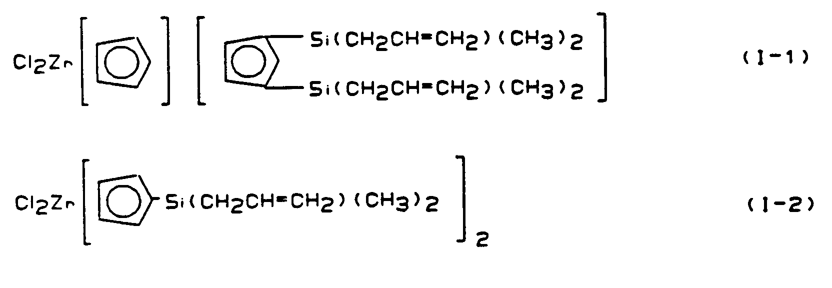

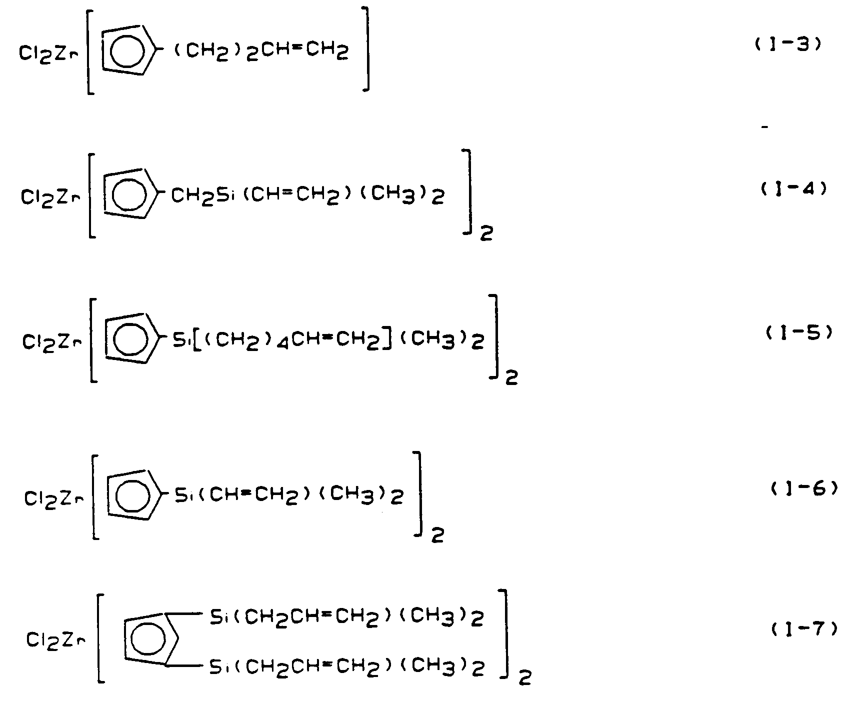

Beispiele für geeignete Metallocenverbindungen der Formel II sind

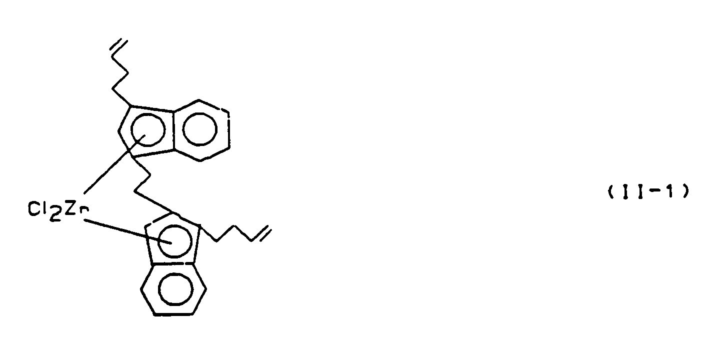

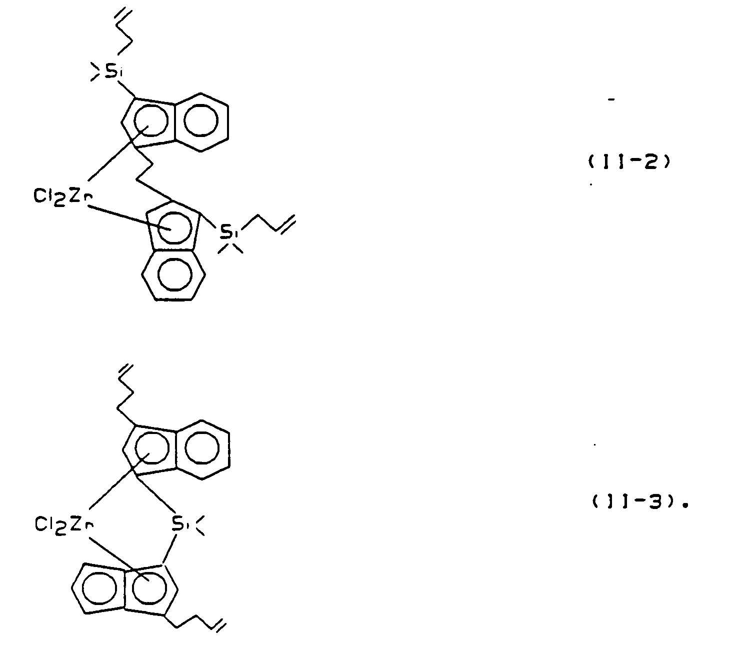

Die Metallocene enthalten mindestens zwei olefinische Funktionen, welche in einer Hydrosilylierungsreaktion, katalysiert mit einer Verbindung der 8. Nebengruppe des Periodensystems der Elemente, beispielsweise Osmium, Iridium und Platin, vorzugsweise mit Platin, insbesondere mit Hexachloroplatinsäurehexahydrat, mit einem Poly(methylhydrogensiloxan), beispielsweise (CH₃)₃SiO[Si(CH₃)HO]₃₅Si(CH₃)₃, zu einem heterogenen Polymerisationskontakt nach folgendem Schema weiterreagieren:

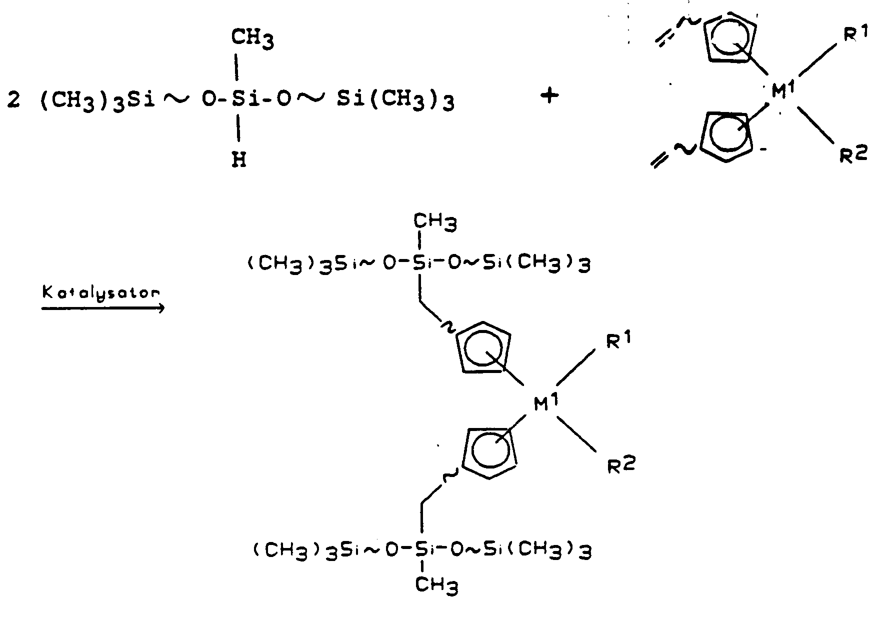

Zur Heterogenisierung wird das Metallocen in einem Lösemittel, beispielsweise einem aliphatischen oder cycloaliphatischen Kohlenwasserstoff, beispielsweise Pentan oder Cyclohexan oder in einem aromatischen Kohlenwasserstoff, beispielsweise Toluol oder Xylol, oder in einem Ether, beispielsweise Diethylether, gelöst, das Poly(methylhydrogensiloxan) und der Hydrosilylierungskatalysator hinzugegeben und das Gemisch 5 bis 120 min, vorzugsweise 10 bis 30 min auf 20 bis 90 °C, vorzugsweise 30 bis 80 °C erwärmt. Daraufhin bildet sich ein grauer Niederschlag, der abfiltriert, gewaschen und getrocknet wird. Der Reaktionsverlauf läßt sich IR-sprektroskopisch aufgrund der C=C- und Si-H-Schwingungsbande verfolgen. Der erfindungsgemäß erhaltene Heterogenkontakt kann zur Polymerisation von 1-Olefinen der Formel

R¹⁵-CH=CH₂,

worin
- R¹⁵: Wasserstoff, eine geradkettige oder verzweigte Alkylgruppe, beispielsweise Ethylen, Propylen oder 4-Methylpenten (1) bedeutet, verwendet werden.

Außerdem kann der Kontakt auch zur Polymerisation von cyclischen Olefinen, wie beispielsweise Cyclopenten, Cyclohexen, Norbornen, Diolefinen und cyclischen Diolefinen eingesetzt werden.

Dabei wird zur Polymerisation neben dem Metallocen ein Aluminoxan als Cokatalysator, dessen Synthese bekannt ist, verwendet.

Anhand der folgenden Beispiele soll die Erfindung erläutert werden.

### Beispiel 1

Zu 1,3 g (32,41 mmol) Kaliumhydrid in 20 cm³ THF wurden bei Zimmertemperatur 2,89 g (24,04 mmol) C₅H₄-(CH₂)₂CH=CH₂ in 50 cm³ THF gelöst, innerhalb von 3 h zugetropft und der Ansatz anschließend über Nacht gerührt. Unumgesetztes Kaliumhydrid wurde abfiltriert, mit kleinen Portionen Ether gewaschen, im Vakuum getrocknet und ausgewogen. Es waren 0,78 g (19,45 mmol).

12,96 mmol K⁺[C₅H₄-(CH₂)₂CH=CH₂]⁻ waren entstanden.

Die abfiltrierte Cyclopentadienid-Lösung wurde innerhalb von 1,5 h zu einer Suspension von 2,46 g (6,52 mmol) Cl₄Zr(THF)₂ in 20 cm³ THF bei -10 °C zugetropft. Nach 4 h Rühren bei Zimmertemperatur wurde der Ansatz filtriert, das Filtrat eingedampft und der Rückstand mit einem Kohlenwasserstoff extrahiert. Nach Einengen der vereinigten Extrakte wurde der bei -40 °C gebildete Niederschlag abgetrennt und im Vakuum getrocknet.

Ausbeute: 1,5 g (3,75 mmol ≙ 57 %)
Cl₂Zr[C₅H₄-(CH₂)₂CH=CH₂]₂

Die Verbindung zeigte ein der Erwartung entsprechendes ¹H-NMR-Spektrum und eine korrekte Elementaranalyse.

### Beispiel 2

Es wurde analog Beispiel 1 gearbeitet, jedoch wurden in Abänderung 0,87 g (21,69 mmol) Kaliumhydrid und 3,56 g (21,67 mmol) C₅H₄-Si(CH₃)₂CH₂CH=CH₂ eingesetzt. Der Umsatz von Kaliumhydrid war vollständig und die Menge Cl₄Zr (THF)₂ betrug 4,08 g (10,82 mmol).

Ausbeute: 2,44 g (4,99 mmol ≙ 46 %)
Cl₂Zr[C₅H₄-Si(CH₃)₂CH₂CH=CH₂]₂

Die Elementaranalyse und das ¹H-NMR-Spektrum entsprachen den Erwartungen.

### Beispiel 3

Es wurden 10,16 g (22,35 mmol) 1,2-[1,1'Bis(3-allyldimethylsilylindenyl)ethan in 100 cm³ THF gelöst und 27,95 cm³ einer 1,6-n-Butyllithium-Hexan-Lösung (44,72 mmol) bei Zimmertemperatur innerhalb von 2 h zugetropft. Nach 4 h Rühren bei ca. 60 °C wurde der Ansatz eingedampft, der Rückstand in einem Kohlenwasserstoff suspendiert, filtriert, gewaschen, getrocknet und ausgewogen. Es waren 9,39 g (20,12 mmol≙94 %) Dilithiumsalz entstanden. Das Dilithiumsalz wurde in 100 cm³ Toluol suspendiert und bei Zimmertemperatur innerhalb 2 h 8,2 g (21,74 mmol) Cl₄Zr (THF)₂ in 100 cm³ THF zugegeben. Nach Rühren über Nacht wurde der Ansatz eingedampft, der Rückstand mit einem Kohlenwasserstoff extrahiert, filtriert und die vereinigten Filtrate eingedampft.

Ausbeute: 5 g (8,13 mmol ≙ 40 %)
Ethylen-bis[1-(3-allyldimethylsilylindenyl)zirkoniumdichlorid.

Die Verbindung zeigte eine korrekte Elementaranalyse.

### Beispiel 4

0,98 g (2 mmol) der Verbindung mit der Formel I-2 wurden in 12 cm³ Toluol gelöst, 0,52 g (0,23 mmol) Poly(methylhydrogensiloxan) und 0,02 g H₂PtCl₆·6H₂O hinzugefügt. Nach wenigen Minuten Erwärmung der Mischung bildete sich eine dunkelgraue, feste Phase. Die überstehende Lösung zeigte im IR-Spektrum keine Si-H-Schwingungsbande mehr. Daher wurde der Niederschlag abgetrennt, gründlich mit Toluol gewaschen, um eventuell unumgesetzten, adsorptiv gebundenen Komplex zu entfernen. Anschließend wurde das Produkt im Vakuum getrocknet. Der elementaranalytisch untersuchte Rückstand enthielt 10,2 % Zr.

### Beispiel 5

Es wurde analog Beispiel 4 gearbeitet, jedoch wurden in Abänderung 0,83 g (1,70 mmol) der Verbindung mit der Formel I-2, 0,45 g (0,20 mmol) Poly(methylhydrogensiloxan) und 0,21 g H₂PtCl₆·6H₂O eingesetzt. Der elementaranalytisch untersuchte Rückstand enthielt 8,4 % Zr.

### Beispiel 6

Es wurde analog Beispiel 4 gearbeitet, jedoch wurden in Abänderung 1,2 g (3 mmol) der Verbindung mit der Formel I-3, 0,74 g (0,33 mmol) Poly(methylhydrogensiloxan) und 0,15 g H₂PtCl₆·6H₂O eingesetzt.
Der elementaranalytisch untersuchte Rückstand enthielt 9,3 % Zr.

### Beispiel 7

In einem 1,5 dm³ Stahlautoklav wurden 900 cm³ einer Dieselölfraktion (Kp=100-120 °C) vorgelegt und auf 70 °C aufgeheizt. Der Reaktor wurde mit einer toluolischen Lösung von 0,25 g Methylaluminoxan und 0,01 mmol des heterogenen Kontaktes aus Beispiel 4 beschickt. Dann wurde Ethylen bis zu einem Enddruck von 7 bar aufgepreßt und 2 h polymerisiert. Die Katalysatorreste in der Suspenision wurden mit wässriger HCl zersetzt. Das Polymere wurde isoliert, mit Aceton gewaschen und getrocknet. Man erhielt 5,1 g Polyethylen. Dies entspricht einer Aktivität von 255 g Polymer/mmol Zr·h (weitere Daten in der Tabelle).

### Bespiel 8

In einem 1,5 dm³ Stahlautoklav wurden 600 cm³ einer Dieselölfraktion (Kp=100-120 °C) und 300 cm³ Cyclopenten vorgelegt und auf 60 °C aufgeheizt. Der Reaktor wurde mit einer toluolischen Lösung von 0,25 g Methylaluminoxan und 0,01 mmol des heterogenen Kontaktes aus Beispiel 4 beschickt. Nach Aufpressen von Ethylen bis 7 bar wurde der Ansatz 2 h polymerisiert. Die Polymer-Lösung wurde in die doppelte Menge einer Methanol/Aceton-Mischung gegeben. Das ausgefallene Ethylen-Cyclopenten-Copolymer wurde isoliert und getrocknet. Die Ausbeute betrug 4,2 g, entsprechend einer Aktivität von 210 g Polymer/mmol Zr·h (weitere Daten in der Tabelle).

### Bespiel 9

In einem 1,5 dm³ Stahlautoklav wurden 900 cm³ Cyclopenten vorgelegt und mit 0,25 g Methylaluminoxan und 0,01 mmol des heterogenen Kontaktes aus Beispiel 4 beschickt. Nach 2-stündiger Polymerisation des Ansatzes bei 60 °C wurde die Polymer-Lösung wie in Beispiel 8 aufgearbeitet. Die Ausbeute an Polymer betrug 1,6 g, entsprechend einer Aktivität von 80 g Polymer/mmol Zr·h (weitere Daten in der Tabelle).

Beispiele 10 und 11 wurden entsprechend den Angaben in der Tabelle durchgeführt.

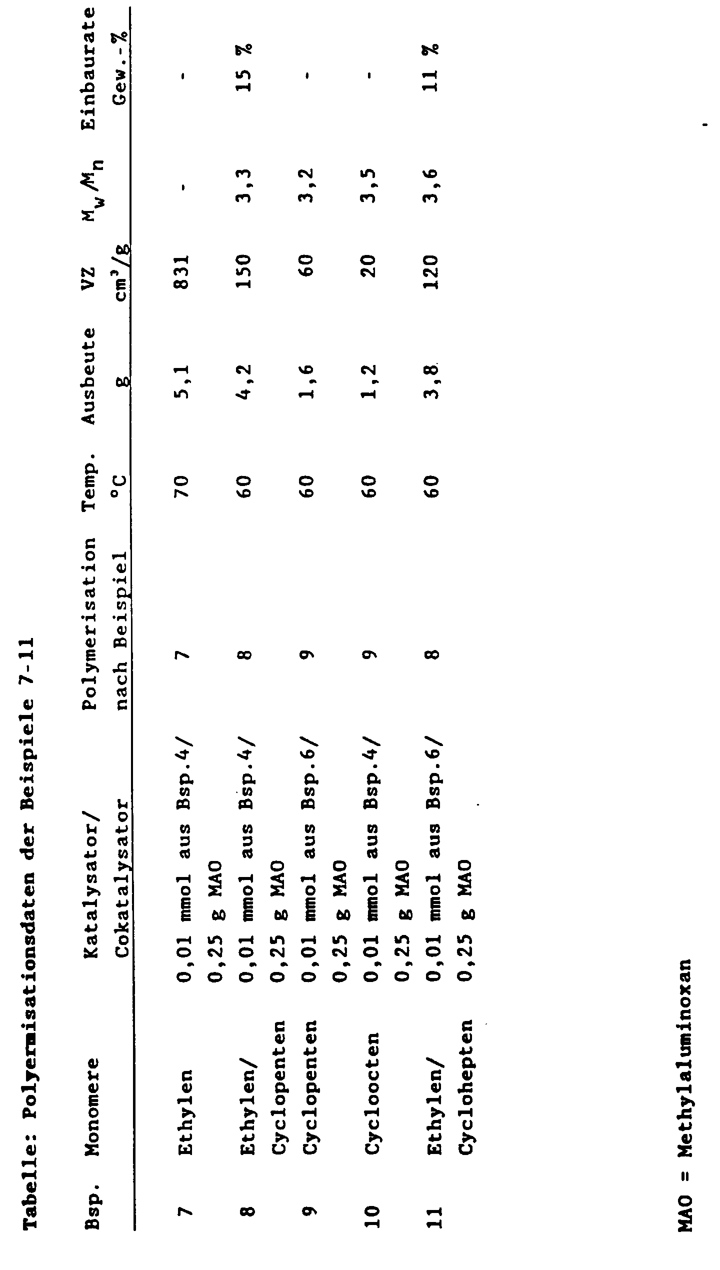

## Patentansprüche

1. Metallocen der Formel I 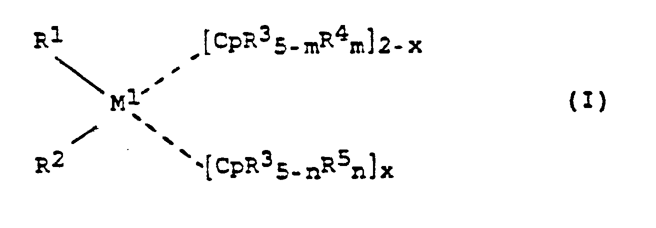 worin
M¹ Zirkonium oder Hafnium ist und
Cp einen Cyclopentadienylrest bedeutet,
R¹ und R² gleich oder verschieden sind und ein Wasserstoffatom, ein Halogenatom, eine C₁-C₁₀-Alkylgruppe, eine C₁-C₁₀-Alkoxygruppe, eine C₇-C₂₀-Arylalkylgruppe, eine C₆-C₁₀-Arylgruppe oder eine C₆-C₁₀-Aryloxygruppe bedeuten, R₁ und R₂ auch miteinander verknüpft sein können und mit M¹ einen Metallocyclus bilden können,
R³ ein Wasserstoffatom, ein Halogenatom, eine C₁-C₁₀-Alkylgruppe, eine C₆-C₁₀-Arylgruppe, eine C₇-C₂₀-Arylalkylgruppe, eine C₁-C₁₀-Fluoralkylgruppe oder C₁-C₁₀-Trialkylsilyl, C₆-C₁₀-Aryl-C₁-C₁₀-dialkylsilyl, C₁-C₁₀-Alkyl-C₆-C₁₀-diarylsilyl oder C₆-C₁₀-Triarylsilyl bedeutet,
R⁴ und R⁵ gleich oder verschieden sind und eine C₂-C₁₀-Alkenylgruppe, eine C₂-C₁₂-Alkenylarylgruppe, eine C₂-C₁₀-Alkenoxygruppe, eine C₂-C₈-Alkenyl-C₁-C₈-dialkylsilylgruppe, eine C₂-C₈-Alkenyl-C₆-C₁₀-diarylsilylgruppe oder eine C₂-C₈-Alkenyl-C₁-C₈-alkyl-C₆-C₁₀-arylsilylgruppe bedeuten,
x null oder 1 ist,
m und n gleich oder verschieden sind und eine Zahl von 1 bis 3 bedeuten,
oder Metallocen der Formel II 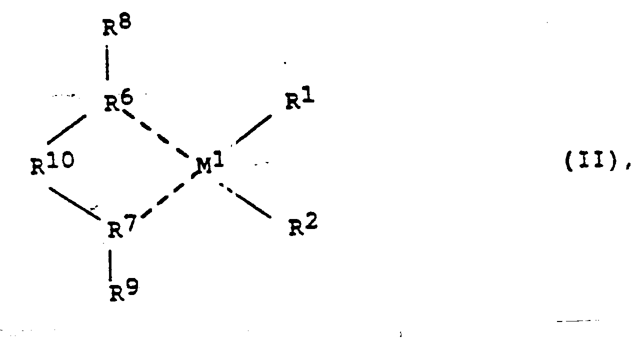 worin
M¹ Titan, Zirkonium oder Hafnium ist und
R¹ und R² gleich oder verschieden sind und ein Wasserstoffatom, ein Halogenatom, eine C₁-C₁₀-Alkylgruppe, eine C₁-C₁₀-Alkoxygruppe, eine C₇-C₂₀-Arylalkylgruppe, eine C₆-C₁₀-Arylgruppe oder eine C₆-C₁₀-Aryloxygruppe bedeuten, R₁ und R₂ auch miteinander verknüpft sein können und mit M¹ einen Metallocyclus bilden können,
R⁶ und R⁷ gleich oder verschieden sind und einen Cyclopentadienyl-, Indenyl- oder Fluorenylrest bedeuten, wobei die genannten Fünfringe mit M¹ eine Sandwichstruktur bilden können,
R⁸ und R⁹ gleich oder verschieden sind, Substituenten der genannten Fünfringe R⁶ und R⁷ in 3-Stellung sind und C₂-C₁₀-Alkenylgruppen oder C₂-C₁₀-Alkenyl-C₁-C₁₀-dialkylsilylgruppe, C₁-C₁₀-Alkyl-C₂-C₁₀-dialkenylsilylgruppe, C₂-C₁₀-Alkeynl-C₆-C₁₀ diarylsilylgruppe oder eine C₆-C₁₀-Aryl-C₂-C₁₀-dialkenylsilylgruppe bedeuten,
R¹⁰ die in den Formeln III-VII dargestellte Bedeutung hat 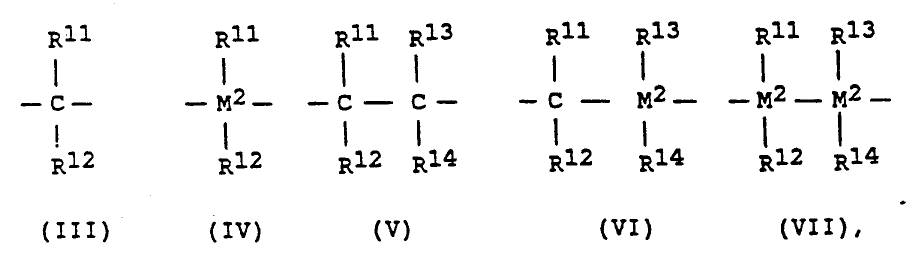 wobei
M² Silizium, Germanium oder Zinn ist und
R¹¹,R¹²,R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₆-C₁₀-Aryloxygruppe oder eine C₇-C₂₀-Arylalkylgruppe bedeuten,-
R¹¹ und R¹², R¹³ und R¹⁴, R¹¹ und R¹³ oder R¹² und R¹⁴ mit den sie verbindenden Atomen ein Ringsystem ausbilden können,
x null oder 1 ist,
m und n gleich oder verschieden sind und eine Zahl von null bis 5 bedeuten.

2. Metallocen gemäß Anspruch 1, worin M¹ Zirkonium oder Hafnium ist, R¹ und R² gleich oder verschieden sind und ein Halogenatom oder eine C₁-C₁₀-Alkylgruppe bedeuten, R¹⁰ CR¹¹R¹² oder M²R¹¹R¹² bedeutet, worin M² Silizium oder Germanium ist und R¹¹ und R¹² gleich oder verschieden sind und eine C₁-C₁₀-Alkylgruppe oder eine C₆-C₁₀-Arylgruppe bedeuten, und m und n gleich oder verschieden sind und eine Zahl von 1 bis 3 bedeuten.

## Claims

1. A metallocene of the formula I 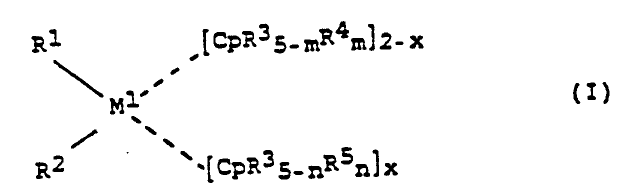 in which
M¹ is zirconium or hafnium and
Cp is a cyclopentadienyl radical,
R¹ and R² are identical or different and are a hydrogen atom, a halogen atom, a C₁-C₁₀-alkyl group, a C₁-C₁₀-alkoxy group, a C₇-C₂₀-arylalkyl group, a C₆-C₁₀-aryl group or a C₆-C₁₀-aryloxy group, R¹ and R² may also be linked to one another and may form a metallocycle together with M¹,
R³ is a hydrogen atom, a halogen atom, a C₁-C₁₀-alkyl group, a C₆-C₁₀-aryl group, a C₇-C₂₀-arylalkyl group, a C₁-C₁₀-fluoroalkyl group or C₁-C₁₀-trialkylsilyl, C₆-C₁₀-aryl-C₁-C₁₀-dialkyl-silyl, C₁-C₁₀-alkyl-C₆-C₁₀-diarylsilyl or C₆-C₁₀-triarylsilyl,
R⁴ and R⁵ are identical or different and are a C₂-C₁₀-alkenyl group, a C₂-C₁₂-alkenylaryl group, a C₂-C₁₀-alkenoxy group, a C₂-C₈-alkenyl-C₁-C₈-dialkylsilyl group, a C₂-C₈-alkenyl-C₆-C₁₀-diarylsilyl group or a C₂-C₈-alkenyl-C₁-C₈-alkyl-C₆-C₁₀-arylsilyl group,
x is zero or 1,
m and n are identical or different and are a number from 1 to 3,
or a metallocene of the formula II 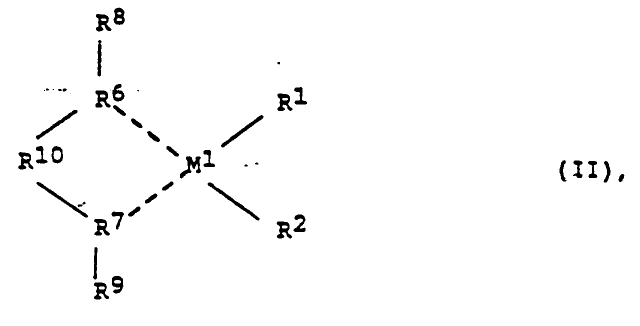 in which
M¹ is titanium; zirconium or hafnium and
R¹ and R² are identical or different and are a hydrogen atom, a halogen atom, a C₁-C₁₀-alkyl group, a C₁-C₁₀-alkoxy group, a C₇-C₂₀-arylalkyl group, a C₆-C₁₀-aryl group or a C₆-C₁₀-aryloxy group, R¹ and R² may also be linked to one another and may form a metallocycle together with M¹,
R⁶ and R⁷ are identical or different and are a cyclopentadienyl, indenyl or fluorenyl radical, it being possible for the five-membered rings mentioned to form a sandwich structure with M¹,
R⁸ and R⁹ are identical or different and are substituents of the five-membered rings R⁶ and R⁷ mentioned in the 3-position and are C₂-C₁₀-alkenyl groups or a C₂-C₁₀-alkenyl-C₁-C₁₀-dialkylsilyl group, C₁-C₁₀-alkyl-C₂-C₁₀-dialkenylsilyl group, a C₂-C₁₀-alkenyl-C₆-C₁₀-diarylsilyl group or a C₆-C₁₀-aryl-C₂-C₁₀-dialkenylsilyl group,
R¹⁰ is as defined in the formulae III-VII 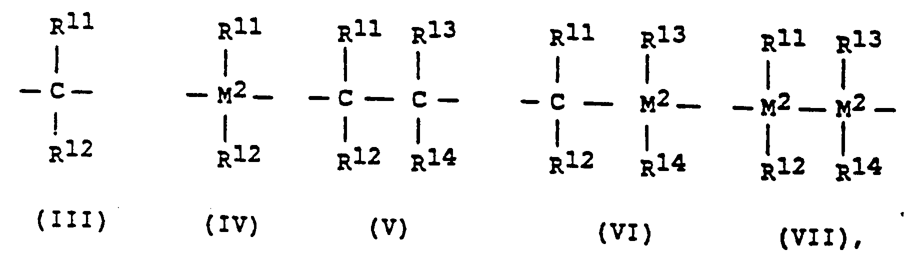 where
M² is silicon, germanium or tin and
R¹¹, R¹², R¹³ and R¹⁴ are identical or different and denote a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₆-C₁₀-aryloxy group or a C₇-C₂₀-arylalkyl group,
R¹¹ and R¹², R¹³ and R¹⁴, R¹¹ and R¹³ or R¹² and R¹⁴, together with the atoms linking them, can form a ring system,
x is zero or 1,
m and n are identical or different and are a number from zero to 5.

2. A metallocene as claimed in claim 1, in which M¹ is zirconium or hafnium, R¹ and R² are identical or different and are a halogen atom or a C₁-C₁₀-alkyl group, R¹⁰ is CR¹¹R¹² or M²R¹¹R¹², in which M² is silicon or germanium and R¹¹ and R¹² are identical or different and are a C₁-C₁₀-alkyl group or a C₆-C₁₀-aryl group, and m and n are identical or different and are a number from 1 to 3.

## Revendications

1. Métallocène de formule I 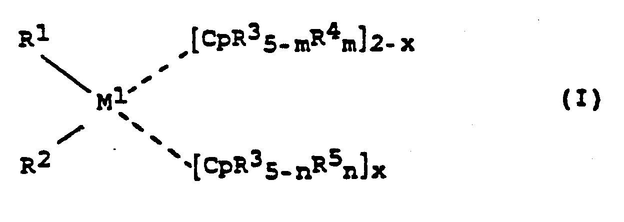 dans laquelle
M¹ représente du zirconium ou de l'hafnium et
Cp représente un reste cyclopentadiényle,
R¹ et R² sont identiques ou différents et représentent un atome d'hydrogène, un atome d'halogène, un groupement alkyle en C₁-C₁₀, un groupement alcoxy en C₁-C₁₀, un groupement arylalkyle en C₇-C₂₀, un groupement aryle en C₆-C₁₀, ou un groupement aryloxy en C₆-C₁₀, R¹ et R² peuvent aussi être reliés et former un métallocycle avec M¹,
R³ représente un atome d'hydrogène, un atome d'halogène, un groupement alkyle en C₁-C₁₀, un groupement aryle en C₆-C₁₀, un groupement arylalkyle en C₇-C₂₀, un groupement fluoroalkyle en C₁-C₁₀, ou un groupement trialkylsilyle en C₁-C₁₀, (aryle en C₆-C₁₀)(dialkylsilyle en C₁-C₁₀), (alkyle en C₁-C₁₀)(diarylsilyle en C₆-C₁₀), ou un groupement triarylsilyle en C₆-C₁₀,
R⁴ et R⁵ sont identiques ou différents et représentent un groupement alcényle en C₂-C₁₀, alcénylaryle en C₂-C₁₂, alcénoxy en C₂-C₁₀, (alcényle en C₂-C₈)(dialkylsilyle en C₁-C₈), (alcényle en C₂-C₈)(diarylsilyle en C₆-C₁₀), ou un groupement (alcényle en C₂-C₈)(alkyle en C₁-C₈)(arylsilyle en C₆-C₁₀),
x vaut 0 ou 1
m et n sont identiques ou différents et représentent un nombre de 1 à 3,
ou métallocène de formule II 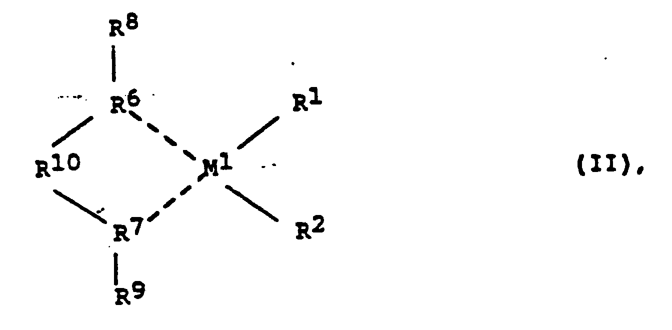 dans laquelle
M¹ représente du titane, du zirconium ou de l'hafnium et
R¹ et R² sont identiques ou différents et représentent un atome d'hydrogène, un atome d'halogène, un groupement alkyle en C₁-C₁₀, un groupement alcoxy en C₁-C₁₀, un groupement arylalkyle en C₇-C₂₀, un groupement aryle en C₆-C₁₀, ou un groupement aryloxy en C₆-C₁₀, R¹ et R² peuvent aussi être reliés et former un métallocycle avec M¹,
R⁶ et R⁷ sont identiques ou différents et représentent un reste cyclopentadiényle, indényle ou fluorényle, où les cycles à 5 cités peuvent former une structure en sandwich avec M¹,
R⁸ et R⁹ sont identiques ou différents et sont des substituants des cycles à 5 R⁶ et R⁷ mentionnés en position 3 et représentent un groupement alcényle en C₂-C₁₀, ou (alcényle en C₂-C₁₀)(dialkylsilyle en C₁-C₁₀), (alkyle en C₁-C₁₀)(dialcénylsilyle en C₂-C₁₀), (alcényle en C₂-C₁₀)(diarylsilyle en C₆-C₁₀), ou un groupement (aryle en C₆-C₁₀)(dialcénylsilyle en C₂-C₁₀),
R¹⁰ prend les significations représentées par les formules III à VII 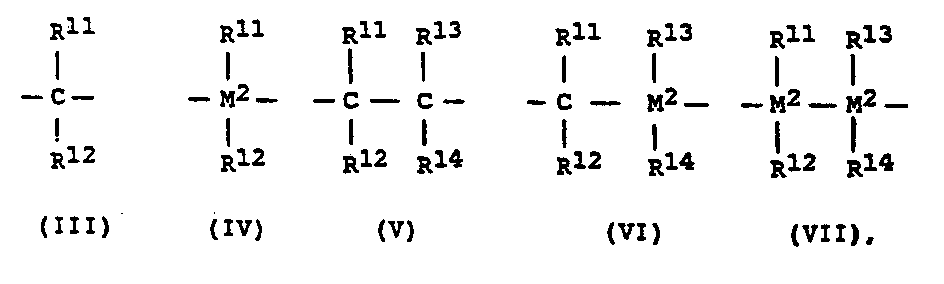 dans lesquelles
M² représente du silicium, du germanium ou de l'étain et
R¹¹, R¹², R¹³ et R¹⁴ sont identiques ou différents et représentent un atome d'hydrogène, un atome d'halogène, un groupement alkyle en C₁-C₁₀, un groupement fluoroalkyle en C₁-C₁₀, un groupement aryle en C₆-C₁₀, un groupement fluoroaryle en C₆-C₁₀, un groupement alcoxy en C₁-C₁₀, un groupement aryloxy en C₆-C₁₀, ou un groupement arylalkyle en C₇-C₂₀,
R¹¹ et R¹², R¹³ et R¹⁴, R¹¹ et R¹³ ou R¹² et R¹⁴ pouvant former un système cyclique avec les atomes d'azote qui les relie,
x vaut 0 ou 1,
m et n sont identiques ou différents et représentent un nombre de 0 à 5.

2. Métallocène selon la revendication 1, dans lequel M¹ représente du zirconium ou de l'hafnium, R¹ et R² sont identiques ou différents et représentent un atome d'halogène ou un groupement alkyle en C₁-C₁₀, R¹⁰ représente CR¹¹R¹² ou M²R¹¹12¹², où M² représente du silicium ou du germanium et R¹¹ et R¹² sont identiques ou différents et représentent un groupement alkyle en C₁-C₁₀ ou un groupement aryle en C₆-C₁₀, et m et n sont identiques ou différents et représentent un nombre de 1 à 3.
